# EUROPÄISCHE PATENTSCHRIFT

(11) **EP 3 755 588 B1**
(45) Veröffentlichungstag und Bekanntmachung des Hinweises auf die Patenterteilung: **22.11.2023**
(21) Anmeldenummer: 19706267.2
(22) Anmeldetag: 18.02.2019
(51) Int. Cl.: B60S 3/04, B60S 3/00, B65D 85/00, G06F 16/90

(54) **VERFAHREN ZUM BETREIBEN EINER FAHRZEUGWASCHANLAGE**
METHOD FOR OPERATING A VEHICLE WASHING FACILITY
PROCÉDÉ POUR FAIRE FONCTIONNER UNE INSTALLATION DE LAVAGE DE VÉHICULES

(30) Priorität: 21.02.2018 DE 102018103832
(43) Veröffentlichungstag der Anmeldung: 30.12.2020
(73) Patentinhaber: WashTec Holding GmbH, 86153 Augsburg (DE)
(72) Erfinder: MAYER, Stefan, 86356 Neusaess (DE)
(74) Vertreter: Schwarz, Claudia
(86) Internationale Anmeldenummer: PCT/EP2019/053948
(87) Internationale Veröffentlichungsnummer: WO 2019/162226

(56) Entgegenhaltungen:
- WO-A1-2014/029740
- CN-A- 107 346 591
- CN-B- 103 266 452
- DE-A1-102007 017 615
- DE-U1-202008 001 532
- US-A1- 2014 379 530

## Beschreibung

Die vorliegende Erfindung betrifft ein Verfahren zum Betreiben einer Fahrzeugwaschanlage und ein Fahrzeugwaschanlagensystem.

Das bestehende System zur Chemieerkennung an Wechselkanistern hat sich als nachteilig erwiesen, da Spezialbehälter verwendet werden, so dass ein in sich geschlossenes System entsteht. Eine Benutzerführung auf Basis von Waschsubstanzdaten und eine automatische Einstellungsübertragung in die Maschine ist bisher nicht bekannt.

Die Druckschrift DE 10 2006 022 477 betrifft eine Kartusche zum Einsetzen in eine Aufnahmevorrichtung einer Fahrzeugbehandlungseinrichtung.

Die Druckschrift DE 20 2008 001 532 U1 offenbart eine Wasch- oder Spülmaschine, bei der Wirkstoffe für die Wäsche in einem Behältnis untergebracht sind, das mit einem Element ausgebildet ist, über das Information über den im Behältnis enthaltenden Wirkstoff entnehmbar ist.

Die WO 2014/029740 A1 betrifft eine Dosiervorrichtung mit einem austauschbaren Vorratsbehälter für eine Fahrzeugbehandlungsanlage.

Die US 2014/0379530 betrifft ein Service-Managementsystem für die Fahrzeugwäsche mit einer elektronischen Client-Server-Plattform zur Verwaltung der Fahrzeugwäsche.

Die Druckschrift CN 103 266 452 B beschreibt ein Steuerverfahren zum Steuern eines Waschmittelvolumens zum Waschen von Kleidung. Es ist die technische Aufgabe der vorliegenden Erfindung, den Betrieb einer Fahrzeugwaschanlage zu vereinfachen.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die Aufgabe durch ein Verfahren zum Betreiben einer Fahrzeugwaschanlage gelöst, mit den Schritten eines optischen Scannens eines Codes, der Waschsubstanzdaten umfasst, an einem Transportbehälter einer Waschsubstanz mittels eines tragbaren Gerätes; eines Umsetzens der Waschsubstanzdaten in Steuerdaten für die Fahrzeugwaschanlage, wobei die Waschsubstanzdaten in Steuerdaten zum Durchführen einer Spülprozedur zum automatischen Spülen eines Dosiersystems für die Waschsubstanz umgesetzt werden, falls die Waschsubstanz gewechselt wird; und eines Steuerns der Fahrzeugwaschanlage auf Basis der Steuerdaten.

Die Fahrzeugwaschanlage dient zum automatischen Waschen von Kraftfahrzeugen, wie beispielsweise Autos, Lastkraftwagen oder Bussen. Der Waschprozess wird beispielsweise mittels rotierender Bürsten auf Basis von Steuerdaten durchgeführt. Durch das angegebene Verfahren wird der technische Vorteil erreicht, dass die Fahrzeugwaschanlage automatisch an die im Transportbehälter vorhandene Waschsubstanz angepasst werden kann.

Der Transportbehälter ist ein Behälter, der zum Transport der Waschsubstanz dient. In einem Fall kann der Transportbehälter als Wechselbehälter vorgesehen sein, aus dem die Waschsubstanz mittels einer Sauglanze entnommen und direkt der Fahrzeugwaschanlage zugeführt wird. In einem anderen Fall wird der Transportbehälter verwendet, um manuell einen Vorratsbehälter für die Waschsubstanz zu befüllen, der fest zu der Fahrzeugwaschanlage gehört.

Der optische Code auf dem Transportbehälter ist ein optisch lesbarer Code, wie beispielsweise ein Barcode oder ein QR-Code. Die Waschsubstanzdaten sind Daten, die für die jeweilige Waschsubstanz in dem Transportbehälter spezifisch sind, wie beispielsweise eine Artikelnummer und/oder eine Webadresse zu einer Onlinedatenbank, aus der weitere Informationen abgerufen werden können. Im Allgemeinen können jedoch auch weitere Informationen in den Waschsubstanzdaten vorgesehen sein.

Die Steuerdaten dienen zum Steuern der Fahrzeugwaschanlage, wie beispielsweise bei einem Nachfüllvorgang. Die Umsetzung der Waschsubstanzdaten in Steuerdaten erfolgt durch eine elektronische Umsetzungseinrichtung, die beispielsweise durch ein Programm auf dem tragbaren Gerät, ein Programm auf einem ferngelegenen Server mit einer Online-Datenbank oder ein Programm innerhalb der Fahrzeugwaschanlage gebildet sein kann. Die Umsetzungseinrichtung kann jedoch auch durch eine festverdrahtete elektronische Schaltung gebildet sein. Die Waschsubstanzdaten werden in die Umsetzungseinrichtung eingegeben. Anschließend werden diejenigen Steuerdaten von der Umsetzungseinrichtung ausgegeben, die den Waschsubstanzdaten zugeordnet sind, beispielsweise mittels einer elektronischen Nachschlagetabelle. Im Allgemeinen kann die Umsetzungseinrichtung an einer beliebigen Stelle oder auch an mehreren Stellen verteilt vorgesehen sein, solange eine direkte oder indirekte Datenkommunikation mit dem tragbaren Gerät und/oder der Fahrzeugwaschanlage möglich ist.

In einer technisch vorteilhaften Ausführungsform des Verfahrens ist das tragbare Gerät ein Mobiltelefon, ein Tablet-PC oder eine Augmented-Reality-Brille. Das Mobiltelefon oder der Tablet-PC umfasst eine Applikation (App) oder eine Cloud-Applikation, anhand der auf die Kamera des Mobiltelefons oder Tablet-PCs zugegriffen werden kann, um den Code zu scannen. Dadurch wird beispielsweise der technische Vorteil erreicht, dass die Waschsubstanzdaten auf einfache Weise mit handelsüblichen Kommunikationsgeräten erfasst und übertragen werden können. Die Augmented-Reality-Brille ist eine Brille mit einem integrierten Mikrodisplay und einer Kamera, so dass dem Benutzer weiterte Informationen zur Umgebung angezeigt werden können. Die Augmented-Reality-Brille kann beim Einfüllen der Waschsubstanz zu betätigende oder handzuhabende Bauteile der Fahrzeugwaschanlage optisch hervorheben.

In einer weiteren technisch vorteilhaften Ausführungsform des Verfahrens werden die Waschsubstanzdaten von dem tragbaren Gerät drahtlos über eine Funkschnittstelle übertragen. Dadurch wird beispielsweise der technische Vorteil erreicht, dass auf korrosionsanfällige Kabel und mechanische Anschlüsse zum Übertragen der Waschsubstanzdaten verzichtet werden kann.

In einer weiteren technisch vorteilhaften Ausführungsform des Verfahrens ist die Funkschnittstelle eine WLAN-Schnittstelle oder eine Bluetooth-Schnittstelle. Dadurch wird beispielsweise der technische Vorteil erreicht, dass Daten effizient und schnell übertragen werden können.

In einer weiteren technisch vorteilhaften Ausführungsform des Verfahrens werden die Waschsubstanzdaten in Steuerdaten für eine Dosierpumpe zum Fördern der Waschsubstanz umgesetzt. Je nach Ausführungsform der Fahrzeugwaschanlage kann die Waschsubstanz aus dem Transportbehälter oder dem Vorratsbehälter innerhalb der Fahrzeugwaschanlage gefördert werden. Die Steuerdaten werden in der Fahrzeugwaschanlage an die Dosierpumpe weitergeleitet, so dass diese eine vorgesehene Dosiereinstellung verwenden kann. Dadurch wird beispielsweise der technische Vorteil erreicht, dass die Dosierpumpe spezifisch je nach Waschsubstanz gesteuert werden kann.

In einer weiteren technisch vorteilhaften Ausführungsform des Verfahrens wird die Durchflussrate der Dosierpumpe auf Basis der Steuerdaten gesteuert. Dadurch wird beispielsweise der technische Vorteil erreicht, dass je nach Waschsubstanz eine geeignete Durchflussrate eingestellt werden kann.

In einer weiteren technisch vorteilhaften Ausführungsform des Verfahrens werden die Waschsubstanzdaten in Steuerdaten zum Ausgeben einer Warnung auf dem tragbaren Gerät umgesetzt, falls ein Haltbarkeitsdatum der Waschsubstanz überschritten ist. Dadurch wird beispielsweise der technische Vorteil erreicht, dass die Verwendung abgelaufener Waschsubstanzen verhindert werden kann. Beim Einsetzen des Transportbehälters als Wechselbehälter kann zudem ein Betrieb der Fahrzeugwaschanlage gesperrt werden, falls das Haltbarkeitsdatum überschritten ist.

In einer weiteren technisch vorteilhaften Ausführungsform des Verfahrens umfassen die Waschsubstanzdaten eine Webadresse zu einer Online-Datenbank. Dadurch wird beispielsweise der technische Vorteil erreicht, dass zusätzliche und umfangreichere Waschsubtanzdaten oder Steuerdaten abgerufen werden können.

In einer weiteren technisch vorteilhaften Ausführungsform des Verfahrens werden die übrigen Waschsubstanzdaten, wie beispielsweise eine Artikelnummer, zu der Online-Datenbank übertragen. Das Übertragen zu der Online-Datenbank kann von dem tragbaren Gerät oder der Fahrzeugwaschanlage durchgeführt werden. Das tragbare Gerät oder die Fahrzeugwaschanlage sind zu diesem Zweck mit einer Internetschnittstelle ausgerüstet. Dadurch wird beispielsweise der technische Vorteil erreicht, dass weitere Waschsubstanzdaten oder Steuerdaten direkt oder indirekt zur Verfügung gestellt werden können.

In einer weiteren technisch vorteilhaften Ausführungsform des Verfahrens werden die Waschsubstanzdaten in Steuerdaten zum Anzeigen von Benutzerinformationen für eine Handhabung des Transportbehälters umgesetzt. Dadurch wird beispielsweise der technische Vorteil erreicht, dass eine korrekte Handhabung der Waschsubstanz durch den Benutzer erreicht werden kann. Wird beispielsweise der Transportbehälter als Wechselbehälter verwendet, kann auf dem tragbaren Gerät angezeigt werden, auf welche Weise der alte Transportbehälter, der in diesem Fall gleichzeitig als Vorratsbehälter für die Fahrzeugwaschanlage dient, durch den Neuen ersetzt werden kann. Auf dem tragbaren Gerät können hierzu die erforderlichen Bedienschritte angezeigt werden. Wird beispielsweise der Transportbehälter jedoch verwendet, um einen festen Vorratsbehälter nachzufüllen, kann angezeigt werden, wo sich der Vorratsbehälter für die Waschsubstanz innerhalb der Fahrzeugwaschanlage befindet. Auch hierzu können auf dem tragbaren Gerät die erforderlichen Bedienschritte angezeigt werden.

Nach der Erfindung werden die Waschsubstanzdaten in Steuerdaten zum Durchführen einer Spülprozedur zum automatischen Spülen eines Dosiersystems für die Waschsubstanz umgesetzt, falls die Waschsubstanz gewechselt wird. Wird beispielsweise anhand der Waschsubstanzdaten festgestellt, dass sich eine neu zugeführte Waschsubstanz von einer zuvor bereitgestellten Waschsubstanz unterscheidet, wird die Spülprozedur auf Basis der Steuerdaten durchgeführt oder initiiert. So kann verhindert werden, dass sich die neu zugeführte Waschsubstanz und die zuvor bereitgestellte Waschsubstanz ungewollt vermischen.

Wird der Transportbehälter, wie oben beschrieben, als Wechselbehälter verwendet, wird vor der Verwendung des neuen Transportbehälters ein weiterer Behälter mit Wasser bereitgestellt. Die Spülprozedur für das Dosiersystem wird nach dem Bereitstellen des Wasserbehälters automatisch durchgeführt, wenn erkannt wird, dass eine andere Waschsubstanz als die vorherige verwendet werden soll. Wird der Transportbehälter hingegen, wie oben beschrieben, zum Nachfüllen eines Vorratsbehälters verwendet, kann der feste Vorratsbehälter zunächst mit Wasser befüllt werden. Die Spülprozedur für das Dosiersystem wird nach dem Befüllen des Vorratsbehälters mit Wasser automatisch durchgeführt, wenn erkannt wird, dass eine andere Waschsubstanz als die vorherige verwendet werden soll. Die eventuell erforderlichen manuellen Bedienschritte können in beiden Fällen auf dem Handgerät angezeigt werden.

In einer weiteren technisch vorteilhaften Ausführungsform des Verfahrens werden die Waschsubstanzdaten in Steuerdaten zum Steuern eines mechanischen Reinigungssystems umgesetzt. Die Steuerdaten können beispielsweise ein Waschprogramm bestimmen oder eine Waschdauer oder eine Drehgeschwindigkeit der Bürsten steuern. Dadurch wird beispielsweise der technische Vorteil erreicht, dass je nach Waschsubstanz das Fahrzeug mechanisch waschsubstanzspezifisch gereinigt werden kann.

Gemäß einem zweiten Aspekt wird die Aufgabe durch ein Fahrzeugwaschanlagensystem gelöst, mit einer Fahrzeugwaschanlage mit einem Steuergerät zum Steuern der Fahrzeugwaschanlage auf Basis von Steuerdaten gemäß dem vorstehend beschriebenen Verfahren; einem tragbaren Gerät zum optischen Scannen eines Codes, der Waschsubstanzdaten umfasst, an einem Transportbehälter einer Waschsubstanz; und einer Umsetzungseinrichtung zum Umsetzen der Waschsubstanzdaten in Steuerdaten für die Fahrzeugwaschanlage. Durch die Fahrzeugwaschanlage werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen
- Fig. 1: eine schematische Darstellung einer Fahrzeugwaschanlage; und
- Fig. 2: ein Blockdiagramm eines Verfahrens zum Betreiben einer Fahrzeugwaschanlage.

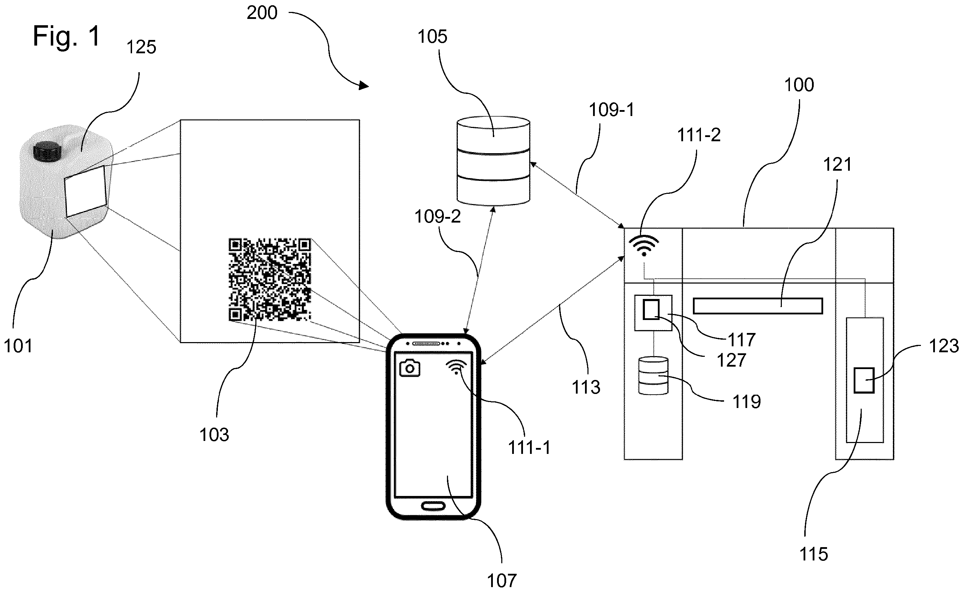

Fig. 1 zeigt eine schematische Darstellung eines Fahrzeugwaschanlagensystems 200 mit einer Fahrzeugwaschanlage 100. Die Fahrzeugwaschanlage 100 dient zum automatischen Reinigen von Fahrzeugen, wie beispielsweise Autos oder Lastwagen. Der Reinigungsvorgang wird mechanisch mittels rotierender Bürsten unter Verwendung von Wasser und weiteren flüssigen, chemischen Waschsubstanzen durchgeführt, wie beispielsweise Reinigungs- oder Pflegesubstanzen. Die Fahrzeugwaschanlage 100 wird zu diesem Zweck elektronisch durch ein Steuergerät 117 unter Verwendung von Steuerdaten gesteuert.

Die Waschsubstanz 125 für den Reinigungsvorgang wird in einem tragbaren Transportbehälter 101 bereitgestellt und aus diesem der Fahrzeugwaschanlage 100 zugeführt. Dies kann auf direkte Weise geschehen, indem eine Sauglanze in den Transportbehälter 101 gehängt wird und die Waschsubstanz 125 der Fahrzeugwaschanlage 100 während des Reinigungsvorgangs aus dem Transportbehälter 101 zugeführt wird. Der Transportbehälter 101 dient in diesem Fall gleichzeitig als Vorratsbehälter. Dies kann aber auch auf indirekte Weise geschehen, indem zunächst ein Vorratsbehälter 123, der in der Fahrzeugwaschanlage 100 vorgesehen ist, mit der Waschsubstanz 125 aus dem tragbaren Transportbehälter 101 befüllt wird.

Der Transportbehälter 101 umfasst einen optisch scanbaren Code 103, wie beispielsweise einen Barcode oder einen zweidimensionalen QR-Code (Quick-Response Code). Der QR-Code kann einer automatischen Fehlerkorrektur unterzogen werden, so dass ein Scannen des Codes 103 robust und fehlertolerant ist. Der Code 103 kann beispielsweise auf dem Transportbehälter 101 aufgedruckt oder mittels eines Etiketts aufgeklebt sein.

Der auf dem Transportbehälter 101 aufgebrachte Code 103 ist maschinenlesbar und umfasst als Waschsubstanzdaten beispielsweise Informationen über eine Artikelnummer, eine Chemikalienidentifikation, einen Produktnamen, einen Chemikalientyp, ein Produktionsdatum, eine Haltbarkeitsdauer, eine Standarddosierung, einen Dosierbereich, eine Dosiereinstellung, eine Produktcharge, einen Hyperlink und/oder eine URL (Uniform Ressource Locator) zu einer Online-Datenbank 105, aus der weitere Daten abgerufen werden können. Zusätzlich kann der Code 103 eine Webadresse umfassen, auf der für den Anwender weitere Informationen enthalten sind, wie beispielsweise ein Sicherheitsdatenblatt, Anwendungshinweise, Gefahrenhinweise oder Werbematerial.

Die Online-Datenbank 105 ist eine Datenbank, die über den bereitgestellten Hyperlink oder die URL (Uniform Ressource Locator) im Internet erreichbar ist. Anhand einer Artikel- oder Identifikationsnummer des Transportbehälters 101, die in den Code 103 eingebettet ist, ist es beispielsweise möglich, Daten über die Waschsubstanz 125 und deren Eigenschaften und Anwendung aus der Online-Datenbank 105 abzurufen. Zudem ist es möglich, dass die Waschsubstanzdaten zu der Online-Datenbank 105 übertragen werden und dort in Steuerdaten für die Fahrzeugwaschanlage 100 umgesetzt werden und an die Fahrzeugwaschanlage 100 übertragen werden.

Auf die Online-Datenbank 105 kann entweder direkt durch die Fahrzeugwaschanlage 100 mittels der Datenverbindung 109-1 oder indirekt durch ein tragbares Gerät zum Scannen des Codes 103 mittels der Datenverbindung 109-2 zugegriffen werden. Durch die Online-Datenbank 105 können über die Webadresse zusätzlich weitere Daten zur Verfügung gestellt werden, wie beispielsweise Logos oder Werbematerial für Anzeigen auf einem Bediengerät oder chargenabhängige Korrekturfaktoren.

Der Code 103 auf dem Transportbehälter 101 wird durch das tragbare Gerät 107 gescannt und eingelesen, wie beispielsweise durch ein Mobiltelefon, ein Smartphone, einen Tablet-PC oder eine Augmented-Reality-Brille. Das tragbare Gerät 107 umfasst zu diesem Zweck eine elektronische Kamera, mit der der Code 103 mittels eines Bildes erfasst werden kann. Anschließend kann das tragbare Gerät 107 das erfasste Bild verarbeiten, um die Daten über die Waschsubstanz 125 in dem Transportbehälter 101 zu erhalten. Zusätzlich können auf dem tragbaren Gerät 107 durch die Verbindung mit der Fahrzeugwaschanlage 100, maschinen- oder waschsubstanzspezifische Nutzeranweisungen ausgegeben werden, wie beispielsweise Animationen, Bilder oder Text, die anhand einer Internetadresse über eine Internetschnittstelle abgerufen werden.

Die Daten über die Waschsubstanz 125 können anschließend von dem tragbaren Gerät 107 elektronisch an die Fahrzeugwaschanlage 100 übergeben werden. Zu diesem Zweck weist sowohl das tragbare Gerät 107 als auch die Fahrzeugwaschanlage 100 eine entsprechende Datenschnittstelle 111-1 und 111-2 auf. Über die beiden Datenschnittstellen 111-1 und 111-2 wird eine Kommunikationsverbindung 113 zwischen dem tragbaren Gerät 107 und der Fahrzeugwaschanlage 100 hergestellt. Die Datenschnittstelle 111-1 und 111-2 sind durch entsprechende elektronische Schaltungen gebildet.

Die Datenschnittstellen 111-1 und 111-2 sind beispielsweise drahtlose Funkschnittstellen, wie beispielsweise WLAN-Schnittstellen oder Bluetooth-Schnittstellen. Dadurch können Informationen über die Fahrzeugwaschanlage 100 und die verwendete Waschsubstanz 125 schnell und effizient zusammengeführt und ausgetauscht werden. Gegenüber dem tragbaren Gerät 107 kann sich die Fahrzeugwaschanlage 100 über Funk identifizieren. In diesem Fall wird die Fahrzeugwaschanlage 100 automatisch von dem tragbaren Gerät 107 erkannt.

Der Code 103 der Waschsubstanzdaten, wie beispielsweise eine Artikelnummer (EAN-Nummer), kann mit dem tragbaren Gerät 107 gescannt oder als solcher erfasst werden. Anschließend können die Waschsubstanzdaten oder der Code 103 auch an die Online-Datenbank 105 über die Datenverbindung 109-2, wie beispielsweise Mobilfunk oder WLAN, übermittelt werden. Anschließend wird eine Push-Mitteilung von der Datenbankapplikation der Online-Datenbank 105 an die Fahrzeugwaschanlage 100 über die Datenverbindung 109-1 mit den weiteren Waschsubstanzdaten oder Steuerdaten gesendet. Im Allgemeinen können die Waschsubstanzdaten auf unterschiedlichen Kommunikationswegen übertragen werden und an verschiedenen Stellen in die Steuerdaten umgesetzt werden.

Bei einem größeren Benutzerkreis ist ein mittelbarer Zugriff auf die Fahrzeugwaschanlage 100 über den Umweg der Online-Datenbank 105 mit einer höheren Netzwerksicherheit verbunden, einfacher einzurichten und gerätekompatibler zu gestalten.

Indem der Fahrzeugwaschanlage 100 digital die Daten über die nachzufüllende Waschsubstanz 125 oder zugeordnete Steuerdaten übergeben werden, können in der Fahrzeugwaschanlage 100 automatische Prozesse auf Basis der Waschsubstanzdaten initiiert werden oder zustandsspezifische Anweisungen gegeben werden. Zu diesem Zweck umfasst die Fahrzeugwaschanlage 100 ein elektronisches Steuergerät 117 mit einem lokalen Datenspeicher 119. Das Steuergerät 117 kann die jeweiligen Funktionen der Fahrzeugwaschanlage 100 steuern, wie beispielsweise eine Dosierpumpe oder ein mechanisches Reinigungssystem 121 für das Fahrzeug. Zu diesem Zweck kann das Steuergerät 117 einen Mikroprozessor umfassen, mit dem die Waschsubstanzdaten oder die Steuerdaten verarbeitet werden.

Das Steuergerät 117 umfasst beispielsweise die Umsetzungseinrichtung 127, die als Hardware- oder Softwaremodul implementiert sein kann. Die Umsetzungseinrichtung 127 ermittelt zu den Waschsubstanzdaten, die jeweils erforderlichen Steuerdaten. Beispielsweise werden aus der Artikelnummer der Waschsubstanzdaten Steuerdaten für das Dosiersystem gewonnen. Hierzu kann auf eine intern gespeicherte Nachsachlagetabelle oder die Online-Datenbank 105 zugegriffen werden. Im Allgemeinen kann die Umsetzung der Waschsubtanzdaten in Steuerdaten auch an anderer Stelle oder durch ein mehrstufiges Verfahren erfolgen.

Das mechanische Reinigungssystem 121 umfasst beispielsweise eine oder mehrere Bürsten, mit denen das Fahrzeug unter Verwendung der Waschsubstanz 125 gereinigt wird. Im Allgemeinen kann das Steuergerät 117 alle Funktionen der Fahrzeugwaschlage 100 auf Basis der Steuerdaten steuern oder regeln. Hierzu umfasst die Fahrzeugwaschanlage 100 zusätzlich entsprechende Sensoren. Je nach den ermittelten Waschsubstanzdaten kann außerdem eine maschinenspezifische interaktive Anleitung aus der Online-Datenbank 105 abgerufen werden. In diesem Fall wird ein Mediensystem 115 auf Basis der Waschsubstanzdaten gesteuert. Das Mediensystem 115 umfasst einen Vorratsbehälter 123 zur internen Bereithaltung von Wasch- und Pflegeprodukten, Dosierpumpen, ein Ventilsystem und ein Druckluftsystem.

Wird beispielsweise eine neue Waschsubstanz 125 bereitgestellt, die eine andere Waschsubstanz 125 in der Fahrzeugwaschanlage ersetzt, kann dies anhand der übermittelten Waschsubstanzdaten von dem Transportbehälter 101 erfasst werden. Zu diesem Zweck werden die übermittelten Waschsubstanzdaten durch das Steuergerät 117 mit denjenigen der vorhanden Waschsubstanz 125 verglichen. Unterscheiden sich die erste und die zweite Waschsubstanz, so wird vor dem Betrieb mit der zweiten Waschsubstanz, ein Dosiersystem zum Zuführen der Waschsubstanz 125 gespült. Dadurch wird der technische Vorteil erreicht, dass sich die beiden Waschsubstanzen nicht ungewollt vermischen.

Im Fall eines Wechselbehältersystems kann der Benutzer angewiesen werden, den aktuellen Transportbehälter 101 in der Fahrzeugwaschanlage 100 zunächst durch einen Behälter zu ersetzen, der mit Wasser befüllt ist. Nachdem dies geschehen ist, spült die Fahrzeugwaschanlage 100 automatisch die Pumpe und die verwendeten Leitungen des Dosiersystems mit dem bereitgestellten Wasser und fordert den Benutzer anschließend auf, den neuen Transportbehälter 101 an die Fahrzeugwaschanlage 100 anzuschließen. Die Kommunikation mit dem Benutzer erfolgt über das tragbare Gerät 107, auf dem alle erforderlichen Bedienschritte angezeigt werden.

Umfasst die Fahrzeugwaschanlage 100 hingegen einen festen Vorratsbehälter 123 für die Waschsubstanz, kann zunächst dieser mit Wasser befüllt werden. Nachdem dies geschehen ist, spült die Fahrzeugwaschanlage 100 automatisch die Pumpe und die verwendeten Leitungen des Dosiersystems mit dem bereitgestellten Wasser und fordert den Benutzer anschließend auf, den Vorratsbehälter 123 mit der neuen Waschsubstanz 125 aus dem Transportbehälter 101 zu befüllen. Die Kommunikation mit dem Benutzer erfolgt auch hier über das tragbare Gerät 107, auf dem alle erforderlichen Bedienschritte angezeigt werden.

Bestätigt der Benutzer, dass die Befüllung des Vorratsbehälters 123 mit der Waschsubstanz 125 aus dem Transportbehälter 101 abgeschlossen ist oder der neue Transportbehälter 101 an die Fahrzeugwaschanlage 100 angeschlossen ist oder wird dies automatisch von der Fahrzeugwaschanlage 100 erkannt, wird die Waschsubstanz 125 automatisch bis zu einer Impfstelle gepumpt, um Betriebsbereitschaft der Fahrzeugwaschanlage 100 zu erreichen.

Entspricht die erste Waschsubstanz 125 der zweiten Waschsubstanz, so wird kein Spülvorgang durchgeführt. Dadurch wird demgegenüber der technische Vorteil erreicht, dass eine Handhabung bei Auffüllung vereinfacht wird und sicheres Wechseln der Waschsubstanz 125 durchgeführt werden kann. Die Fahrzeugwaschanlage 100 weist dann beispielsweise den Benutzer an, den Vorratsbehälter 123 ohne weitere Spülprozedur zu befüllen. Zu diesem Zweck können über das tragbare Gerät 107 dem Benutzer entsprechende Hinweise gegeben werden, beispielsweise über angezeigte Bilder oder Videos.

Soll eine Waschsubstanz 125 aus dem Transportbehälter 101 in einen festen Vorratsbehälter 123 aus einer Mehrzahl möglicher vorhandener Vorratsbehälter 123 eingefüllt werden, kann aufgrund der Waschsubstanzdaten der korrekte Vorratsbehälter 123 und dessen Position innerhalb der Fahrzeugwaschanlage 100 ermittelt und angezeigt werden. Zu diesem Zweck können Daten über einen Maschinentyp von der Fahrzeugwaschanlage 100 an das tragbare Gerät 107 übermittelt werden. Das tragbare Gerät 107 kann dann anhand des Maschinentyps und der Waschsubstanzdaten durch Abfragen der Online-Datenbank 105 ermitteln, welcher Vorratsbehälter 123 für die Waschsubstanz 125 geeignet ist und wo sich dieser innerhalb der Fahrzeugwaschanlage 100 befindet. In einer anderen Ausführungsform kann auch eine Maschinenanleitung direkt von der Fahrzeugwaschanlage 100 an das tragbare Gerät 107 übermittelt werden. Nach einer Befüllung kann das System zudem automatisch entlüftet werden.

Wenn die Waschsubstanzdaten übergeben werden, kann somit eine Anleitung zum Nachfüllen bereits vorhandener Waschsubstanzen oder jede andere geeignete Information auf dem tragbaren Gerät 107 angezeigt werden.

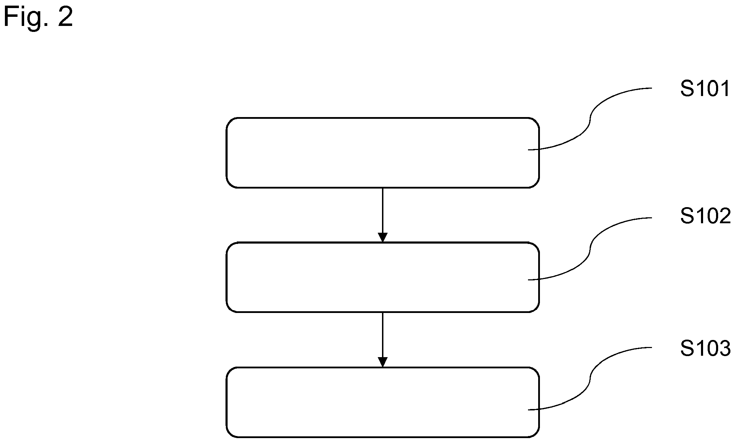

Fig. 2 zeigt ein Blockdiagramm des vorteilhaften Verfahrens zum Betreiben der Fahrzeugwaschanlage. In einem ersten Schritt S101 wird der Code 103, der die Waschsubstanzdaten umfasst, an dem Transportbehälter 101 der Waschsubstanz 125 mittels des tragbaren Gerätes 107 optisch gescannt und erfasst. Die Waschsubstanzdaten werden anschließend aus dem Code 103 extrahiert, wie beispielsweise durch eine automatische Bilderkennung. Die Waschsubstanzdaten können dann an die Fahrzeugwaschanlage 100 oder die Online-Datenbank 105 gesendet werden.

Anschließend werden im Schritt S102 die extrahierten Waschsubstanzdaten in Steuerdaten für die Fahrzeugwaschanlage 100 umgesetzt. Diese Umsetzung kann an verschiedenen geeigneten Orten mittels der elektronischen Umsetzungseinrichtung 127 erfolgen, wie beispielsweise in dem tragbaren Gerät 107, in der Fahrzeugwaschanlage 100 oder auf dem Server mit der Online-Datenbank 105.

Dann wird in Schritt S103 die Fahrzeugwaschanlage 100 auf Basis der Steuerdaten durch das elektronische Steuergerät 117 gesteuert. Dies umfasst alle Maßnahmen, die elektronische oder mechanische Funktionen der Fahrzeugwaschanlage 100 betreffen. Beispielsweise kann automatisch je nach verwendeter Waschsubstanz 125 ein Waschprogramm ausgewählt werden oder eine Dosierpumpe gesteuert werden.

Dadurch kann die Fahrzeugwaschanlage 100 schnell und effizient an die verwendete Waschsubstanz 125 angepasst werden. Funktionen und Einstellungen der Fahrzeugwaschanlage 100 lassen sich auf einfache Weise je nach Waschsubstanz 125 durch das elektronische Steuergerät 117 unter Verwendung der spezifisch ermittelten Steuerdaten verändern. Die Waschsubstanzdaten können ebenfalls an die Fahrzeugwaschanlage 100 übertragen werden und in dem Steuergerät 117 gespeichert werden, so dass auch eine spätere Verwendung der Waschsubstanzdaten möglich ist.

Alle in Verbindung mit einzelnen Ausführungsformen der Erfindung erläuterten und gezeigten Merkmale können in unterschiedlicher Kombination in einem nicht beanspruchten Gegenstand vorgesehen sein, um gleichzeitig deren vorteilhafte Wirkungen zu realisieren. Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 100: Fahrzeugwaschanlage
- 101: Transportbehälter
- 103: optischer Code
- 105: Online-Datenbank
- 107: tragbares Gerät
- 109: Datenverbindung
- 111: Datenschnittstellen
- 113: Kommunikationsverbindung
- 115: Mediensystem
- 117: Steuergerät
- 119: Datenspeicher
- 121: Reinigungssystem
- 123: Vorratsbehälter
- 125: Waschsubstanz
- 127: Umsetzungseinrichtung

- 200: Fahrzeugwaschanlagensystem

- S101: Verfahrensschritt
- S102: Verfahrensschritt
- S103: Verfahrensschritt

## Patentansprüche

1. Verfahren zum Betreiben einer Fahrzeugwaschanlage (100), mit den Schritten:
Optisches Scannen (S101) eines Codes (103), der Waschsubstanzdaten umfasst, an einem Transportbehälter (101) einer Waschsubstanz (125) mittels eines tragbaren Gerätes (107);
Umsetzen (S102) der Waschsubstanzdaten in Steuerdaten für die Fahrzeugwaschanlage (100), wobei die Waschsubstanzdaten in Steuerdaten zum Durchführen einer Spülprozedur zum automatischen Spülen eines Dosiersystems für die Waschsubstanz (125) umgesetzt werden, falls die Waschsubstanz (125) gewechselt wird; und
Steuern (S103) der Fahrzeugwaschanlage (100) auf Basis der Steuerdaten.

2. Verfahren nach Anspruch 1, wobei das tragbare Gerät (107) ein Mobiltelefon, ein Tablet-PC oder eine Augmented-Reality-Brille ist.

3. Verfahren nach einem der vorangehenden Ansprüche, wobei die Waschsubstanzdaten von dem tragbaren Gerät (107) drahtlos über eine Funkschnittstelle (111-1) übertragen werden.

4. Verfahren nach Anspruch 3, wobei die Funkschnittstelle (111-1) eine WLAN-Schnittstelle oder eine Bluetooth-Schnittstelle ist.

5. Verfahren nach einem der vorangehenden Ansprüche, wobei die Waschsubstanzdaten in Steuerdaten für eine Dosierpumpe zum Fördern der Waschsubstanz (125) umgesetzt werden.

6. Verfahren nach Anspruch 5, wobei die Durchflussrate der Dosierpumpe auf Basis der Steuerdaten gesteuert wird.

7. Verfahren nach einem der vorangehenden Ansprüche, wobei die Waschsubstanzdaten in Steuerdaten zum Ausgeben einer Warnung auf dem tragbaren Gerät (107) umgesetzt werden, falls ein Haltbarkeitsdatum der Waschsubstanz überschritten ist.

8. Verfahren nach einem der vorangehenden Ansprüche, wobei die Waschsubstanzdaten eine Webadresse zu einer Online-Datenbank (105) umfassen.

9. Verfahren nach Anspruch 8, wobei die übrigen Waschsubstanzdaten zu der Online-Datenbank (105) übertragen werden.

10. Verfahren nach einem der vorangehenden Ansprüche, wobei die Waschsubstanzdaten in Steuerdaten zum Anzeigen von Benutzerinformationen für eine Handhabung des Transportbehälters (101) umgesetzt werden.

11. Verfahren nach einem der vorangehenden Ansprüche, wobei die die Waschsubstanzdaten in Steuerdaten zum Steuern eines mechanischen Reinigungssystems (121) umgesetzt werden.

12. Fahrzeugwaschanlagensystem (200), mit:
einer Fahrzeugwaschanlage (100) mit einem Steuergerät (117) zum Steuern (S103) der Fahrzeugwaschanlage (100) auf Basis von Steuerdaten mit einem Verfahren gemäß einem der vorangehenden Verfahrensansprüche;
einem tragbaren Gerät (107) zum optischen Scannen eines Codes (103), der Waschsubstanzdaten umfasst, an einem Transportbehälter (101) einer Waschsubstanz (125); und
einer Umsetzungseinrichtung (127) zum Umsetzen der Waschsubstanzdaten in Steuerdaten für die Fahrzeugwaschanlage (100).

## Claims

1. Method of operating a vehicle wash installation (100), comprising the steps:
Optically scanning (S101) a code (103) comprising wash substance data on a transport container (101) of a wash substance (125) using a mobile device (107);
converting (S102) the wash substance data into control data for the vehicle washing installation (100), wherein the wash substance data is converted into control data for performing a flushing procedure for automatically flushing a dosing system for the wash substance (125) if the wash substance (125) is changed; and
controls (S103) of the vehicle wash installation (100) based on the control data.

2. Method according to claim 1, wherein the mobile device (107) is a cell phone, a tablet PC, or augmented reality glasses.

3. Method according to any one of the preceding claims, wherein the wash substance data is transmitted wirelessly from the mobile device (107) via a radio interface (111-1).

4. Method according to claim 3, wherein the radio interface (111-1) is a WLAN interface or a Bluetooth interface.

5. Method according to any one of the preceding claims, wherein the wash substance data is converted into control data for a metering pump for conveying the washsubstance (125).

6. Method of claim 5, wherein the flow rate of the metering pump is controlled based on the control data.

7. Method according to any one of the preceding claims, wherein the wash substance data is converted into control data for issuing a warning on the mobile device (107) if an expiration date of the wash substance is exceeded.

8. Method according to any one of the preceding claims, wherein the wash substance data comprises a web address to an online database (105).

9. Method of claim 8, wherein the remaining wash substance data is transferred to the online database (105).

10. Method according to any one of the preceding claims, wherein the wash substance data is converted into control data for displaying user information for a handling of the transport container (101).

11. Method according to any one of the preceding claims, wherein the wash substance data is converted into control data for controlling a mechanical cleaning system (121).

12. Vehicle wash system (200), with:
a vehicle washing installation (100) with a control unit (117) for controlling (S103) the vehicle wash installation (100) on the basis of control data with a method according to any of the preceding method claims;
a mobile device (107) for optically scanning a code (103) comprising wash substance data on a transport container (101) of a wash substance (125); and
a conversion device (127) for converting the washing substance data into control data for the vehicle wash system (100).

## Revendications

1. Procédé de fonctionnement d'une installation de lavage de véhicules ( 100 ), comprenant les étapes suivantes :
Scanner optiquement (S101) d'un code (103) comprenant des données de substance de lavage sur un récipient de transport (101) d'une substance de lavage (125) au moyen d'un dispositif portable (107);
convertir (S102) les données de substance de lavage en données de commande pour la installation de lavage de véhicule (100), dans lequel les données de substance de lavage sont converties en données de commande pour exécuter une procédure de rinçage pour rincer automatiquement un système de dosage pour la substance de lavage (125) si la substance de lavage (125) est changée; et
commander(S103) de l'installation de lavage de véhicules (100) sur la base des données de commande.

2. Procédé selon la revendication 1, dans lequel le dispositif portable (107) est un téléphone mobile, une tablette PC ou des lunettes à réalité augmentée.

3. Procédé selon l'une quelconque des revendications précédentes, dans lequel les données de substance de lavage sont transmises sans fil par le dispositif portable (107) via une interface radio (111-1).

4. Procédé selon la revendication 3, dans lequel l'interface radio (1111-) est une interface WLAN ou une interface Bluetooth.

5. Procédé selon l'une quelconque des revendications précédentes, dans lequel les données de substance de lavage sont converties en données de commande pour une pompe de dosage destinée à acheminer la substance de lavage (125).

6. Procédé selon la revendication 5, dans lequel le débit de la pompe de dosage est commandé sur la base des données de commande.

7. Procédé selon l'une quelconque des revendications précédentes, dans lequel les données de substance de lavage sont converties en données de commande pour émettre un avertissement sur le dispositif portable (107) si une date de péremption de la substance de lavage est dépassée.

8. Procédé selon l'une quelconque des revendications précédentes, dans lequel les données de substance de lavage comprennent une adresse Web vers une base de données en ligne (105).

9. Procédé selon la revendication 8, dans lequel les données de substance de lavage restantes sont transférées à la base de données en ligne (105).

10. Procédé selon l'une quelconque des revendications précédentes, dans lequel les données de substance de lavage sont converties en données de commande pour afficher des informations d'utilisateur pour une manipulation du récipient de transport (101).

11. Procédé selon l'une quelconque des revendications précédentes, dans lequel les données de substance de lavage sont converties en données de commande pour commander un système de nettoyage mécanique (121).

12. Système de lavage de véhicules (200), avec:
d'une installation de lavage de véhicule (100) avec un appareil de commande (117) pour commander (S103) l'installation de lavage de véhicule (100) sur la base de données de commande avec un procédé selon l'une des revendications de procédé précédentes ;
un dispositif portable (107) pour scanner optiquement un code (103) comprenant des données de substance de lavage sur un récipient de transport (101) d'une substance de lavage (125) ; et
un dispositif de conversion (127) pour convertir les données de substance de lavage en données de commande pour l'installation de lavage de véhicule (100).
